# EUROPÄISCHE PATENTSCHRIFT

(11) **EP 1 639 318 B1**
(45) Veröffentlichungstag und Bekanntmachung des Hinweises auf die Patenterteilung: **21.12.2011**
(21) Anmeldenummer: 04741707.6
(22) Anmeldetag: 02.06.2004
(51) Int. Cl.: G01C 19/56, G01P 9/04

(54) **VERFAHREN ZUR ÜBERWACHUNG EINES DREHRATENSENSORS**
METHOD FOR MONITORING A ROTATIONAL SPEED SENSOR
PROCEDE DE SURVEILLANCE D'UN CAPTEUR DE VITESSE DE ROTATION

(30) Priorität: 30.06.2003 DE 10329541
(43) Veröffentlichungstag der Anmeldung: 29.03.2006
(73) Patentinhaber: Continental Automotive GmbH, 30165 Hannover (DE)
(72) Erfinder: MORELL, Heinz-Werner, 67659 Kaiserslautern (DE); SCHMID, Dietmar, 65606 Villmar (DE)
(86) Internationale Anmeldenummer: PCT/EP2004/050994
(87) Internationale Veröffentlichungsnummer: WO 2005/001382

(56) Entgegenhaltungen:
- WO-A-01/77620
- DE-A- 19 845 185
- US-A1- 2002 178 813

## Beschreibung

Die Erfindung betrifft ein Verfahren zur Überwachung eines Drehratensensors mit einem Vibrationskreisel, der mit einem ersten Eingang und einem ersten Ausgang Teil eines primären Regelkreises ist, der den Vibrationskreisel durch Zuführung eines Erregersignals zum ersten Eingang mit seiner Eigenfrequenz erregt, wobei der Vibrationskreisel ferner mit einem zweiten Eingang und mit einem zweiten Ausgang Teil eines sekundären Regelkreises ist, wobei dem zweiten Ausgang ein Ausgangssignal entnehmbar ist, das nach Verstärkung und Analog/Digital-Wandlung in eine Inphase-Komponente und eine Quadratur-Komponente demoduliert wird, wobei die Komponenten nach Filterung wieder moduliert und zu einem Treibersignal zusammengesetzt werden, das dem zweiten Eingang zugeführt wird, und wobei aus der Inphase-Komponente ein Drehratensignal abgeleitet wird.

Beispielsweise aus EP 0 461 761 B1 sind Drehratensensoren bekannt geworden, bei welchen ein Vibrationskreisel in zwei gegenüber einer Hauptachse radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, so können durch Ausfall oder fehlerhafte Funktion Gefährdungen auftreten. Um diese zu vermeiden, ist eine Funktionsüberwachung des Drehratensensors erforderlich.

Eine solche Überwachung wird in vorteilhafter Weise bei dem erfindungsgemäßen Verfahren dadurch durchgeführt,
- dass der Inphase-Komponente und der Quadratur-Komponente ein Testsignal hinzugefügt wird, dessen Frequenz im Treibersignal außerhalb des Durchlassbereichs des zweiten Regelkreises liegende Seitenbänder bewirkt,
- dass das jeweils in der Inphase-Komponente und in der Quadratur-Komponente nach Durchlaufen der Regelschleife vorhandene Testsignal überwacht wird und
- dass eine Fehlermeldung abgegeben wird, wenn die Amplitude unter einem vorgegebenen Schwellwert liegt.

Durch das erfindungsgemäße Verfahren ist eine Überwachung der Funktion des gesamten Regelkreises einschließlich des Vibrationskreisels während des Betriebes möglich, ohne dass die Funktion des Drehratensensors in irgendeiner Weise beeinflusst wird.

Eine vorteilhafte Weiterbildung des erfindungsgemäßen Verfahrens besteht darin, dass den Komponenten vor dem Hinzufügen des Testsignals Messsignale entnommen werden, welche synchron demoduliert werden.

Eine Erfassung möglichst vieler Veränderungen im sekundären Regelkreis kann bei einer anderen Weiterbildung dadurch erfolgen, dass die Messsignale aus beiden Komponenten jeweils auf ihre Amplitude, das Verhältnis der Amplitude zueinander und/oder auf ihre Phase überwacht werden. Dabei ist vorzugsweise vorgesehen, dass Messsignale vor und nach einer Filterung der Komponenten abgeleitet werden.

Da die durch die Modulation entstandenen Seitenbänder und damit auch das Modulationssignal sowie die Messsignale äu-βerst geringe Amplituden aufweisen, kann zur Unterdrückung des Rauschens vorgesehen sein, dass die synchron demodulierten Messsignale über eine vorgegebene Zeit integriert werden und dass der Wert des Integrals mit dem vorgegebenen Schwellwert verglichen wird. Alternativ kann das Verfahren auch derart ausgebildet sein, dass die synchron demodulierten Messsignale integriert werden und dass die Zeit gemessen wird, bis die integrierten Messsignale einen vorgegebenen Schwellwert erreichen.

Bei den bekannten Vibrationskreiseln hat es sich als günstig herausgestellt, wenn das Modulationssignal eine Frequenz von 200 Hz aufweist.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1:: ein Blockschaltbild eines Drehratensensors und
- Fig. 2:: eine detailliertere Darstellung eines sekundären Regelkreises im Drehratensensor.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

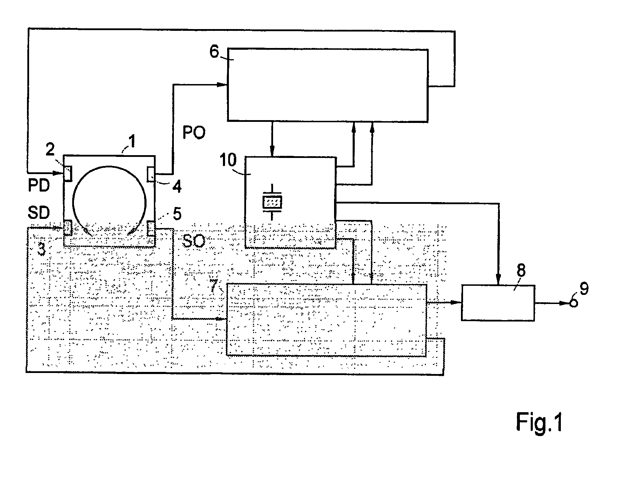

Fig. 1 zeigt ein Blockschaltbild einer Anordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises 7 ist. Der primäre Regelkreis 6 dient zur Anregung von Schwingungen mit der Resonanzfrequenz des Vibrationskreisels von beispielsweise 14 kHz. Die Anregung erfolgt dabei in einer Achse des Vibrationskreisels, zu welcher die für den sekundären Regelkreis benutzte Schwingungsrichtung um 90° versetzt ist. Im sekundären Regelkreis 7 wird das Signal SO in eine Inphase-Komponente und eine Quadratur-Komponente aufgespalten, von denen eine über ein Filter 8 einem Ausgang 9 zugeleitet wird, von welchem ein der Drehrate proportionales Signal abnehmbar ist.

In beiden Regelkreisen 6, 7 erfolgt ein wesentlicher Teil der Signalverarbeitung digital. Die zur Signalverarbeitung erforderlichen Taktsignale werden in einem quarzgesteuerten digitalen Frequenz-Synthesizer 10 erzeugt, dessen Taktfrequenz im dargestellten Beispiel 14,5 MHz beträgt. Von einer Erläuterung des primären Regelkreises wird abgesehen, da diese zum Verständnis des Ausführungsbeispiels nicht erforderlich ist.

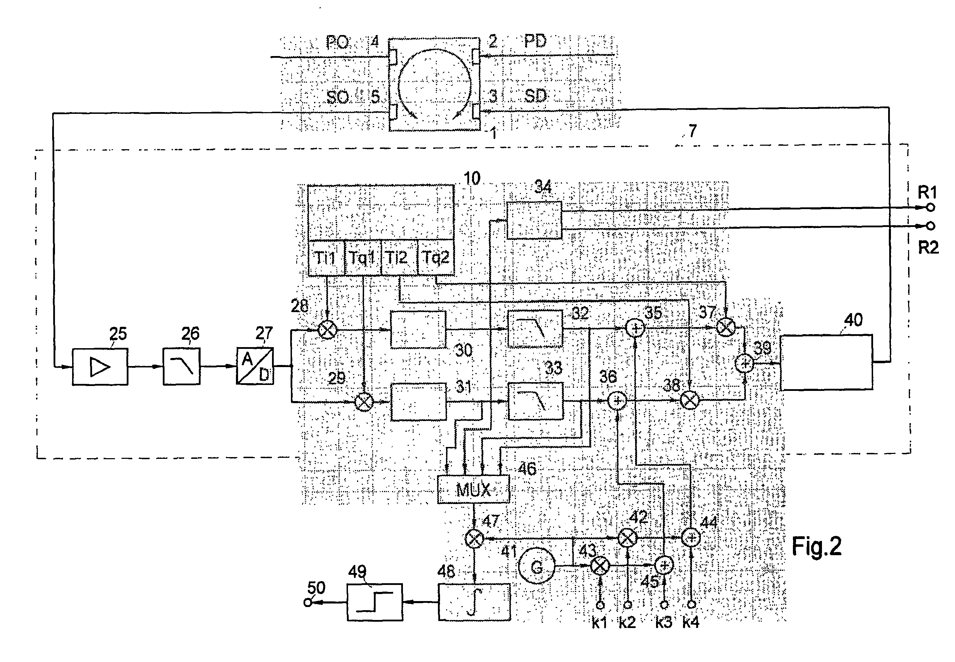

Der sekundäre Regelkreis 7 ist in Fig. 2 als Blockschaltbild dargestellt und enthält einen Verstärker 25, ein Anti-Alias-Filter 26 und einen Analog/Digital-Wandler 27. Mit Hilfe von Multiplizierern 28, 29, denen das verstärkte und digitalisierte Signal SO und Träger Ti1 und Tq1 zugeführt werden, erfolgt eine Aufspaltung in eine Inphase-Komponente und eine Quadratur-Komponente.

Beide Komponenten durchlaufen anschließend je ein (sinx/x)-Filter 30, 31 und ein Tiefpassfilter 32, 33. Aus dem gefilterten Realteil werden mit Hilfe einer Aufbereitungsschaltung 34 zwei Signale R1 und R2 abgeleitet, welche die mit dem Drehratensensor zu messende Drehrate darstellen. Die Signale R1 und R2 unterscheiden sich dadurch, dass das Signal R2 nicht den gesamten durch die verwendete Schaltungstechnik möglichen Amplitudenbereich von beispielsweise 0V bis +5V einnimmt. Zur Ausgabe einer Fehlermeldung wird das Signal R2 auf Null gelegt, was das angeschlossene System als Fehlermeldung erkennt.

Den Tiefpassfiltern 32, 33 ist je ein Addierer 35, 36 nachgeschaltet. Anschließend erfolgt mit Hilfe von Multiplizierern 37, 38 eine Remodulation beider Komponenten Si bzw. Sq mit Trägern Ti2 und Tq2. Eine Addition bei 39 ergibt wieder eine 14-kHz-Schwingung, die in einem Ausgangstreiber 40 in einen zur Anregung des Vibrationskreisels 1 geeigneten Strom umgewandelt wird.

Zur Durchführung des erfindungsgemäßen Verfahrens wird in einem Generator 41 ein Modulationssignal von 200 Hz erzeugt. In zwei Multiplizierern 42, 43 wird dieses Signal mit Konstanten k1 und k2 multipliziert, die einstellbar sind bzw. bei Einschalten aus einem Speicher geladen werden, wodurch unabhängig voneinander die Amplituden des Testsignals für die beiden Komponenten einstellbar ist. In anschließenden Addierern 44, 45 werden einstellbare Vorspannungen k3 und k4 hinzuaddiert. Die somit abgeleiteten Komponenten des Testsignals werden in den Addierern 35 und 36 der Inphase-Komponente und der Quadratur-Komponente hinzuaddiert. Durch die anschließenden Multiplizierer 37, 38 und den Addierer 39 wird dann das Trägersignal mit dem wieder zusammengefassten demodulierten Ausgangssignal und zusätzlich mit dem Modulationssignal moduliert.

Die vom Ausgang 5 des Vibrationskreisels nach Verstärkung, Anti-Alias-Filterung 26, Analog/Digital-Wandlung und Demodulation bei 28, 39 gewonnenen Komponenten werden jeweils vor den Filtern 32, 33 und nach den Filtern 32, 33 abgegriffen und als Messsignale einem Multiplexer 46 zugeführt, dessen Ausgang mit einem Multiplizierer 47 verbunden ist, der als Synchron-Demodulator dient. Dessen Ausgangssignal wird bei 48 über eine größere Anzahl von Perioden integriert und einer Schwellwertschaltung 49 zugeleitet. Das Vorhandensein der Testsignale wird dadurch festgestellt, dass innerhalb einer vorgegebenen Zeit das jeweilige Integral einen vorgegebenen Schwellwert überschreitet. Ist dies nicht der Fall, wird bei 50 ein Alarmsignal ausgegeben. Ein Phasenfehler in mindestens einem der Testsignale wird durch die Synchrondemodulation ebenfalls festgestellt.

## Patentansprüche

1. Verfahren zur Überwachung eines Drehratensensors mit einem Vibrationskreisel,
- der mit einem ersten Eingang und einem ersten Ausgang Teil eines primären Regelkreises ist, der den Vibrationskreisel durch Zuführung eines Erregersignals zum ersten Eingang mit seiner Eigenfrequenz erregt,
- wobei der Vibrationskreisel ferner mit einem zweiten Eingang und mit einem zweiten Ausgang Teil eines sekundären Regelkreises ist,
- wobei dem zweiten Ausgang ein Ausgangssignal entnehmbar ist, das nach Verstärkung und Analog/Digital-Wandlung in eine Inphase-Komponente und eine Quadratur-Komponente demoduliert wird,
- wobei die Komponenten nach Filterung wieder moduliert und zu einem Treibersignal zusammengesetzt werden, das dem zweiten Eingang zugeführt wird, und
- wobei aus der Inphase-Komponente ein Drehratensignal abgeleitet wird,
**dadurch gekennzeichnet,**
- **dass** der Inphase-Komponente und der Quadratur-Komponente ein Testsignal hinzugefügt wird, dessen Frequenz im Treibersignal außerhalb des Durchlassbereichs des zweiten Regelkreises liegende Seitenbänder bewirkt,
- **dass** das jeweils in der Inphase-Komponente und in der Quadratur-Komponente nach Durchlaufen der Regelschleife vorhandene Testsignal überwacht wird und
- **dass** eine Fehlermeldung abgegeben wird, wenn die Amplitude unter einem vorgegebenen Schwellwert liegt.

2. Verfahren nach Anspruch 1, **dadurch gekennzeichnet, dass** den Komponenten vor dem Hinzufügen des Testsignals Messsignale entnommen werden, welche synchron demoduliert werden.

3. Verfahren nach Anspruch 2, **dadurch gekennzeichnet, dass** die Messsignale aus beiden Komponenten jeweils auf ihre Amplitude, das Verhältnis der Amplitude zueinander und/oder auf ihre Phase überwacht werden.

4. Verfahren nach einem der Ansprüche 2 oder 3, **dadurch gekennzeichnet, dass** Messsignale vor und nach einer Filterung der Komponenten abgeleitet werden.

5. Verfahren nach einem der Ansprüche 2 bis 4, **dadurch gekennzeichnet, dass** die synchron demodulierten Messsignale über eine vorgegebene Zeit integriert werden und dass der Wert des Integrals mit dem vorgegebenen Schwellwert verglichen wird.

6. Verfahren nach einem der Ansprüche 2 bis 4, **dadurch gekennzeichnet, dass** die synchron demodulierten Messsignale integriert werden und dass die Zeit gemessen wird, bis die integrierten Messsignale einen vorgegebenen Schwellwert erreichen.

7. Verfahren nach einem der vorhergehenden Ansprüche, **dadurch gekennzeichnet, dass** das Modulationssignal eine Frequenz von 200 Hz aufweist.

## Claims

1. Method for monitoring a rotation rate sensor with a vibrational gyroscope
- which has a first input and a first output which form part of a primary control loop which excites the vibrational gyroscope by supplying an excitation signal to the first input at its natural frequency,
- where the vibrational gyroscope also has a second input and a second output which form part of a secondary control loop,
- where an output signal can be taken from the second output, said output signal being amplified and subjected to analog/digital conversion and then demodulated into an inphase component and a quadrature component,
- where the components are filtered and are then modulated again and compiled to form a driver signal which is supplied to the second input, and
- where a rotation rate signal is derived from the inphase component,
**characterized**
- **in that** the inphase component and the quadrature component have a test signal added to them whose frequency brings about sidebands which are situated in the driver signal outside of the second control loop's passband,
- **in that** the respective test signal which is present in the inphase component and in the quadrature component after passing through the control loop is monitored, and
- **in that** an error message is output if the amplitude is below a prescribed threshold value.

2. Method according to Claim 1, **characterized in that** measurement signals are taken from the components prior to the addition of the test signal and are synchronously demodulated.

3. Method according to Claim 2, **characterized in that** the measurement signals from both components are respectively monitored for their amplitude, for the ratio of the amplitudes and/or for their phase.

4. Method according to either of Claims 2 or 3, **characterized in that** measurement signals are derived before and after the components are filtered.

5. Method according to one of Claims 2 to 4, **characterized in that** the synchronously demodulated measurement signals are integrated over a prescribed time, and **in that** the value of the integral is compared with the prescribed threshold value.

6. Method according to one of Claims 2 to 4, **characterized in that** the synchronously demodulated measurement signals are integrated, and **in that** the time before the integrated measurement signals reach a prescribed threshold value is measured.

7. Method according to one of the preceding claims, **characterized in that** the modulation signal has a frequency of 200 Hz.

## Revendications

1. Procédé de contrôle d'un capteur de vitesse de rotation par un gyroscope de vibrations,
- qui, par une première entrée et par une première sortie, fait partie d'un circuit primaire de régulation qui excite, par sa fréquence propre, le gyroscope de vibrations, par envoi d'un signal d'excitation à la première entrée,
- dans lequel le gyroscope de vibrations fait partie, en outre, par une deuxième entrée et par une deuxième sortie, d'un circuit secondaire de régulation,
- dans lequel il peut être prélevé de la deuxième sortie un signal de sortie, qui, après amplification et transformation analogique et/ou numérique, est démodulé en une composante en phase et en une composante en quadrature,
- dans lequel les composantes sont, après filtration, remodulées et rassemblées en un signal d'attaque, qui est envoyé à la deuxième entrée, et
- dans lequel un signal de vitesse de rotation est déduit de la composante en phase,
**caractérisé**
- **en ce que** l'on ajoute à la composante en phase et à la composante en quadrature un signal de test, dont la fréquence provoque dans le signal d'attaque des bandes latérales se trouvant à l'extérieur de la bande passante du deuxième circuit de régulation,
- **en ce que** l'on contrôle le signal de test présent respectivement dans la composante en phase et dans la composante en quadrature, après traversée de la boucle de régulation, et
- **en ce que** l'on émet un message d'erreur, si l'amplitude devient inférieure à une valeur de seuil prescrite.

2. Procédé suivant la revendication 1, **caractérisé en ce que** l'on prélève des composantes, avant l'addition du signal de test, des signaux de mesure, qui sont démodulés de manière synchrone.

3. Procédé suivant la revendication 2, **caractérisé en ce que** l'on contrôle l'amplitude, le rapport des amplitudes l'une par rapport à l'autre et/ou la phase des signaux de mesure des deux composantes.

4. Procédé suivant l'une des revendications 2 ou 3, **caractérisé en ce que** l'on déduit des signaux de mesure, avant et après, un filtrage des composantes.

5. Procédé suivant l'un des revendications 2 à 4, **caractérisé en ce que** l'on intègre les signaux de mesure démodulés de manière synchrone sur une durée prescrite et **en ce que** l'on compare la valeur de l'intégral à la valeur de seuil prescrite.

6. Procédé suivant l'un des revendications 2 à 4, **caractérisé en ce que** l'on intègre les signaux de mesure démodulés de manière synchrone et **en ce que** l'on mesure la durée, jusqu'à ce que les signaux de mesure intégrés atteignent une valeur de seuil prescrite.

7. Procédé suivant l'un des revendications précédentes, **caractérisé en ce que** le signal de modulation a une fréquence de 200 Hz.
